# EUROPEAN PATENT APPLICATION

(11) **EP 1 229 531 A2**
(43) Date of publication of application: **07.08.2002**
(21) Application number: 02075239.0
(22) Date of filing: 21.01.2002
(51) Int. Cl.: G11B 7/26, G11B 7/007

(54) **Method for customizing programmable cd-rom**

(30) Priority: 01.02.2001 US 775150
(71) Applicant: EASTMAN KODAK COMPANY, Rochester, New York 14650 (US)
(72) Inventor: Lawson, Rowan R. J., c/o Eastman Kodak Company, Rochester, New York 14650-2201 (US)
(74) Representative: Nunney, Ronald Frederick Adolphe

(57) **Abstract**

A method of customizing a storage medium having one or more recorded session(s) and having a writeable portion which includes the steps of providing in a recorded session a program for marketing or sales of one or more particular products or services writing information in the writeable portion pertaining to a particular user selected from a plurality of potential users of the product described in the recorded session, such information including data which particularly identifies the particular user; and delivering the recorded medium with the user-identified data to the particular user.

## Description

The present invention relates to customizing a hybrid optical recording to be used as a marketing tool, to be targeted directly to a particular end-user or group of end-users.

Optical media, such as CD-ROM, are frequently used as promotional agents to bring software, audio, video, or other multimedia experiences or data to users. This allows new kinds of promotional experiences to occur that more traditional types of promotion do not allow. A disadvantage of this approach is that the CD-ROM media are mass-produced and can not provide the user with any personal reason to run the software on the disc. Many times, there is no compelling reason for the end-user to do so, and the richness of the experience will be lost.

A way to give the user a personal reason to view the content on the media would be a more personalized approach. If the content of the media can be specifically tailored to the user, perhaps even by name or preferences based on past actions such as buying habits, the user can feel more inclined to view the media.

Currently, a customized optical disc is available through the technologies such as write-once CD (CD-WO or CD-R) and rewriteable CD (CD-RW). The content can be written to the disc using standard optical disc writers, and a part of the content can be customized toward the potential target. Thus, each disc can contain common content and customized content.

A disadvantage with this approach is that each disc must be written individually in its entirety, which is time-consuming. This can be partially ameliorated through the use of a bank of multiple optical disc writers, which will write the common content to a number of discs simultaneously. Such a bank of multiple writers can entail a large capital expense, and it still is limited in its throughput. A bank of twenty high-speed writers (a large array) can require a week or more, running around the clock, to produce a medium-large (200,000 disc) promotion which includes 35 megabytes of data on the disc (only about 5% of the disc's capacity).

It is therefore an object of the present invention to provide a method to customize a storage medium, such as a programmable CD-ROM.

This object is achieved by a method of customizing a storage medium having one or more recorded session(s) in and having a writeable portion comprising the steps of:
a) providing in a recorded session a program for marketing or sales of one or more particular products or services;
b) writing information in the writeable portion pertaining to a particular user selected from a plurality of potential users of the product described in a recorded session, such information including data which particularly identifies the particular user; and
c) delivering the recorded medium with the user-identified data to the particular user.

An optical disc such as a CD-ROM can be customized but still mass-produced quickly and economically. It can also be targeted directly to an end-user or group of end-users.
FIG. 1 shows a hybrid Programmable CD-ROM in accordance with this invention;
FIG. 2 is a block diagram showing the process for creating a customized Programmable CD-ROM;
FIG. 3 is a block diagram showing how this invention can be used by an end-user;
FIG. 4 is a block diagram showing the method of completing a product purchase;
FIG. 5 is a block diagram of a subroutine showing the steps necessary to establish a proper information interchange format;
FIG. 6 shows a block diagram of one example: the process for using a Programmable CD-ROM as a promotional tool for an automobile manufacturer;
FIG. 7 shows a block diagram of another example: the process for using a Programmable CD-ROM as a promotional tool for an internet service provider; and
FIG. 8 shows a block diagram of one example: the process for using a Programmable CD-ROM as a promotional tool for an E-commerce service.

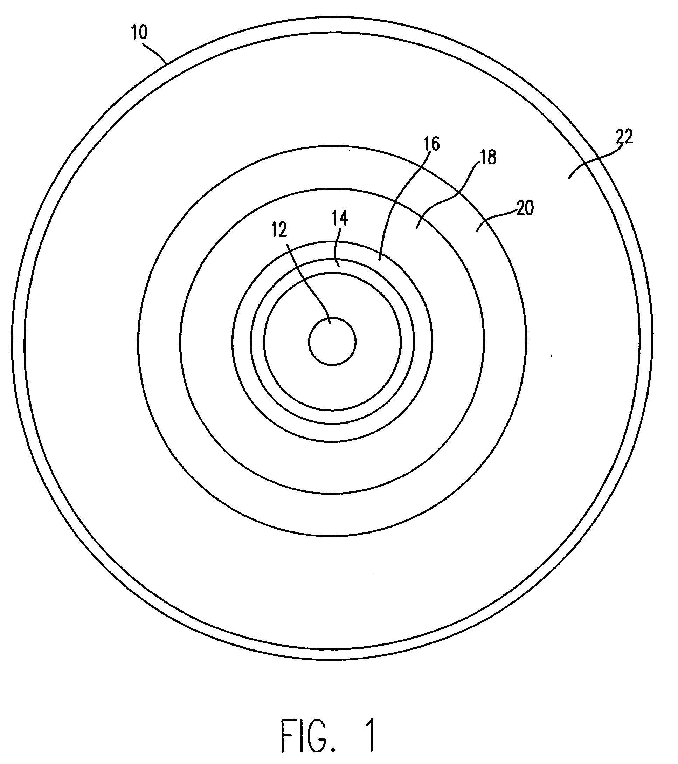

Turning now to FIG. 1, we see one embodiment of an optical storage medium in accordance with this invention. The storage medium in this embodiment is a Programmable CD-ROM disc, which is also known as a hybrid optical disc 10. It includes a center hole 12, a Power Control Area (PCA) 14, a Program Memory Area (PMA) 16, a first (Mastered, or ROM) session 18 which is a mastered recorded session or preformed session in the read-only memory area (ROM portion) of the hybrid optical disc 10, a second (written) session 20 which is a written session, and also can optionally include a writeable portion shown as user-accessible storage area (optional) 22 which can be used for further information storage by the end-user. It will be understood that more than one mastered or ROM session 18 can be preformed on the hybrid optical disc 10. Moreover, more than one second (written) session 20 can also be recorded. The first (Mastered, or ROM) session 18 can for example include control programs, a program for marketing or sales, and information of a promotional nature that will be needed on every copy of the hybrid optical disc 10. This first session 18 is written during mastering of the hybrid optical disc 10, and is thus stamped identically into each copy of the hybrid optical disc 10.

The second (written) session 20 includes customized information, which can include the name of the targeted individual, an address, previous purchasing history, special regional information, or any other information that the promoter deems necessary to target the disc to a specific individual or group of individuals. The second session 20 can also include a unique identification for security purposes. The second or writeable session 20 is written at a later time using a standard commercially-available CD writer, for example.

Each session is created in accordance with Orange Book standards, and has a segmented structure. Each session includes a lead-in segment, a data segment, and a lead-out segment. These segments of the sessions have been omitted from FIG. 1 for clarity.

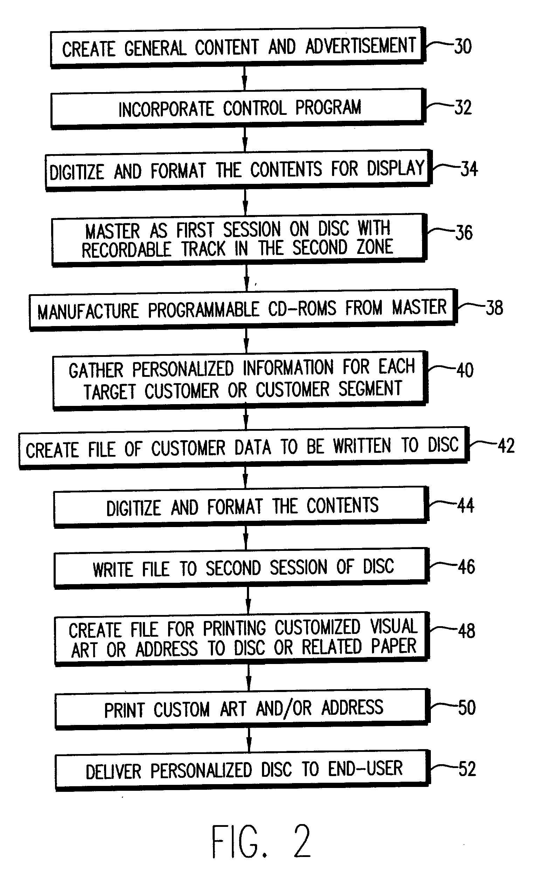

Turning now to FIG. 2, we see a method for creating a customized hybrid optical disc 10. The general content and promotional material is created in step 30. This can include any information that the promoter wishes to place before a user. A control program is incorporated in step 32. The control program will control the display of the promotional material and information. The general content and control program are digitized and formatted for display (step 34), and then used as the data for mastering (step 36) the first session 18 with a recordable track in the second zone of the hybrid optical disc 10. The master disc is used in step 38 to manufacture, in bulk, hybrid optical discs 10 that include the program for marketing or sales in the prerecorded session.

The further steps of FIG. 2 then customize the hybrid optical discs 10 individually to a targeted customer or potential customer. The promoter gathers (step 40) the customized information deemed necessary to personalize the hybrid optical disc 10. In general, the promoter obtains the requisite personal information for a plurality of potential users. Such information can include the customer's name, address, geographic location, credit information, or any other information deemed relevant or important by the promoter for the purpose of the given promotion. This information for one potential user is gathered (step 42) into a file that will be written to the hybrid optical disc 10. The customer information is digitized and formatted in step 44, and the information is then written to the optical disc 10 as a second session 20 in step 46. This can be done with any CD-R or CD-RW drive in almost any computer using any of many commercially available programs designed for writing information to a CD-R session. The hybrid optical disc 10 can be further customized then by creating a file for writing the potential user's identification information on another medium (step 48), and then printing it in step 50 to the other medium, such as an associated document or the surface of the hybrid optical disc 10 itself. This can include such personalized information as the user's name and/or address, which would show users that the content has been directed at them directly, and perhaps even serve as direct mailing labels. The purpose of this is to provide visual cues that the disc is indeed customized for the particular user. The hybrid optical disc 10 can then be delivered in step 52 to the end-user by any normal delivery method (e.g. standard mail).

It will be appreciated that variations in these steps can occur and still be within the spirit of this invention. As an example, the customized file for printing can be created immediately after the customized information is gathered. The hybrid optical disc 10 can also include one or more mastered sessions and one or more written sessions. The promoter can also select multiple potential users from a database and create a customized disc for each.

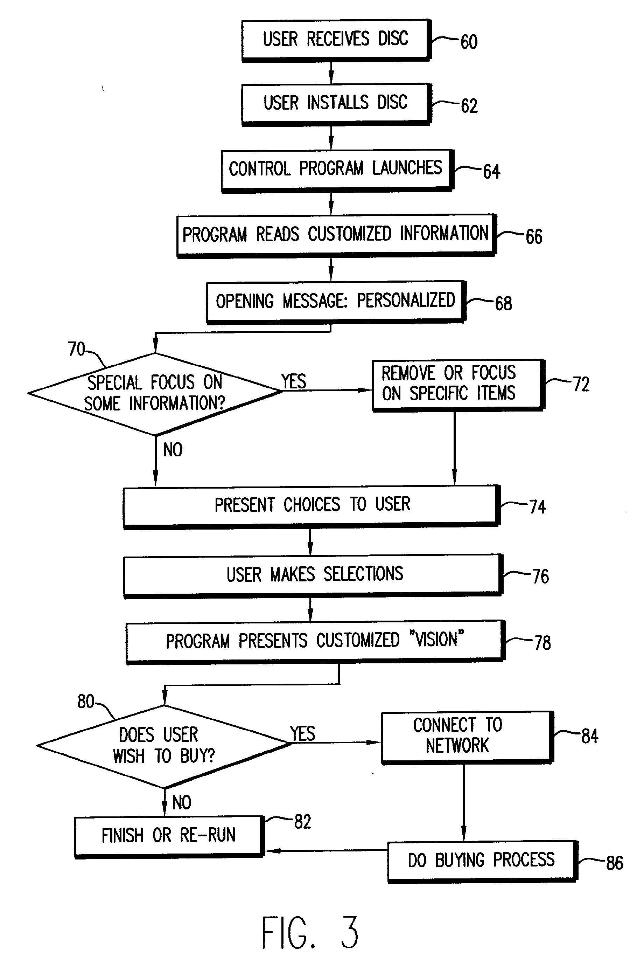

Turning now to FIG. 3, we see how this embodiment will behave in the hands of an end-user to give the promoter's desired result. In step 60, the end-user is provided with a hybrid optical disc 10 in accordance with this invention. The user can receive this hybrid optical disc 10 by any number of means, including via the mail or by a retail visit. The user can specifically have requested this experience, or the promoter can deem that the user is a part of a selected target audience. The user, realizing that the hybrid optical disc 10 is customized, installs the hybrid optical disc 10 on his or her computer in step 62, and the control program launches in step 64. In step 66, the program reads the customized information present in second (written) session 20 and presents an opening message personalized directly to the viewing end-user (step 68).

The control program reads more of the customized information and decides (step 70) if some of the general information in the first (Mastered, or ROM) session 18 should not be presented or should be emphasized. If so, in step 72 it removes or emphasizes those items in the list of choices that will be presented to the end-user. The control program then presents appropriate choices to the end-user (step 74) and the end-user makes selections based on the possible choices and/or options (step 76). Choices at this point can include color, style, size, cost, or any other criteria that can be important and appropriate to the end-user. When the end-user has made all the choices, the control program presents a customized "vision" of what the end-user wants in step 78. This can be in any of several ways of viewing, such as customized photo, three-dimensional walk-around, interactive movie, or any other presentation technique.

In step 80, the control program queries the user if he or she wishes to make a purchase. If no, the program can finish or start again from the beginning (step 82). If the end-user does wish to buy, the program connects the user to the Internet or other network (step 84) and then proceeds to do the buying process (step 86).

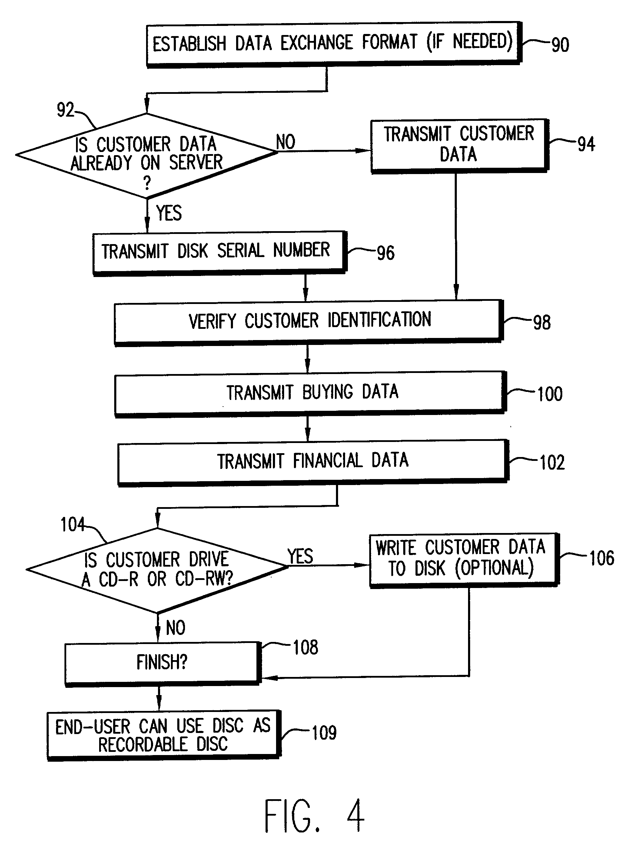

Turning now to FIG. 4, we see the method of completing the buying process in this embodiment, if the end-user chooses to make a purchase or reservation. In step 90, the customer system and the remote system establish a information exchange format or set of formats, if necessary. The system then determines in step 92 if the customer information already exists on the remote system. If it does not, the customer information is transmitted from the hybrid optical disc 10 to the remote system in step 94. If the information already exists on the remote system, a disc serial number is transmitted in step 96. The customer information or the disc serial number is then used (step 98) to verify the identity of the end-user.

When the identity of the end-user has been established, the buying data that had been determined (in steps 74, 76, 78) is transmitted (step 100) by the format agreed to in step 90. The control program then transmits any financial data in step 102. The control program can then determine (step 104) if the end-user drive is a writeable drive. If the end-user's drive is writeable, the remote system can instruct the control program to write the purchase data to the hybrid optical disc 10 in step 106. If the drive is not a writer, the automatic process finishes. The end-user can then use the hybrid optical disc 10 as a standard CD-R disc if he has a CD writer (step 109).

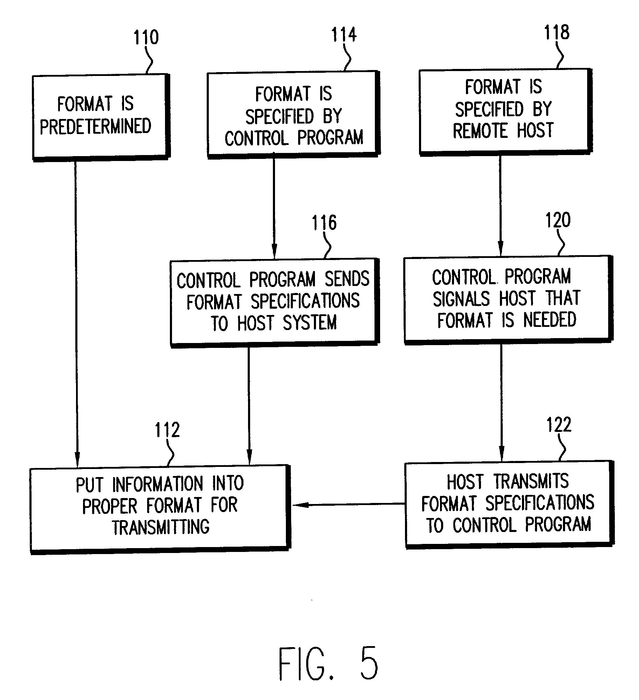

Turning now to FIG. 5, we see an embodiment of a method to establish a information interchange format as needed in step 90 in FIG. 4. Several scenarios are possible and are handled by a subroutine that is included in the preformed session. In case 110, the format is predetermined and both the control program and the host program are designed to utilize this structure. In this case, the control program puts the necessary information into the necessary format and transmits it (step 112) by any of a number of well-known protocols.

In second case 114, there can be several formats possible and the control program will specify the format to use. In step 116, the control program sends, by any of a number of well-known protocols, the format in which the information will be sent. The control program can then transmit the information as described above in step 112.

In third case 118, the information format is one of a number that is to be specified by the remote host. In step 120, the control program signals the host that the correct format is needed. The host then sends the proper format in step 122. The control program can then put the information into the proper format for transmitting in step 112.

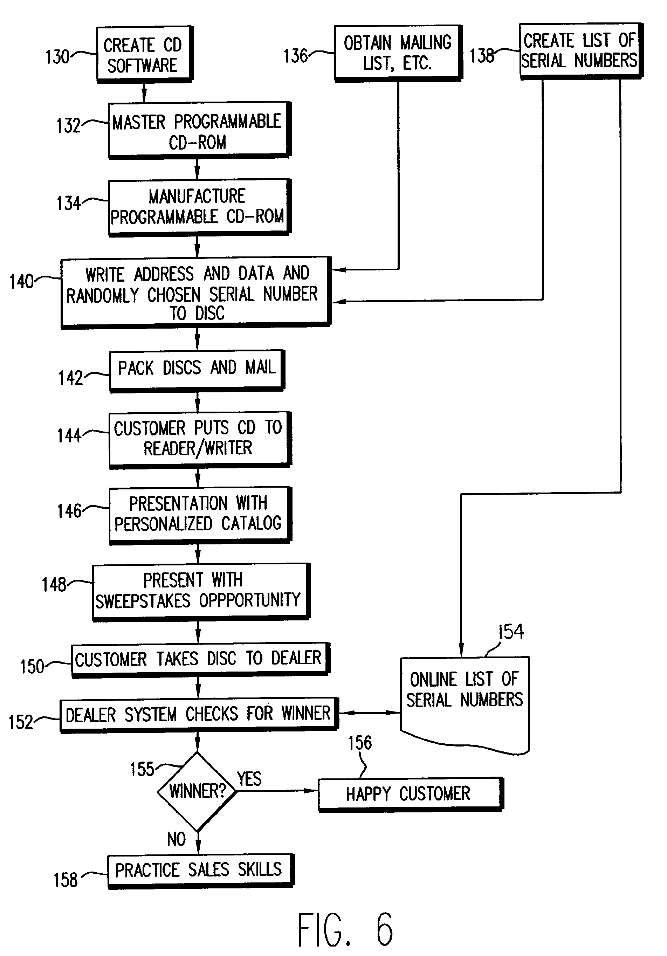

EXAMPLE 1. As an illustrative example, an automotive company can create a personalized promotional disc for their vehicles. Turning now to FIG. 6, we see one way this can be accomplished. In step 130, the advertiser has the necessary software and standard information prepared for the hybrid optical disc 10. This can include promotional and advertising information on the vehicles. It can also include data sheets for the various vehicles, pictures, colors, options, interactive demonstrations, standard pricing, standard contact information such as nationwide toll-free numbers or Internet links, standard pricing information, standard financing information, regional information for all regions, and any other information the promoter deemed necessary or interesting. This software would also include a control program that launches automatically upon inserting the CD into a drive, and which controls the display of the information based on the information included in the first session and also the customized information that will be included in the second session. The hybrid optical discs 10 containing this information are mastered (step 132), including a preformed identification, and manufactured (step 134) in large quantities by the aforementioned process for making hybrid optical discs 10, and include room for further recording.

As part of this process the automotive company can obtain customized information that it will wish to use to customize the hybrid optical discs 10 (step 136). This will be used for mass mailings. This step will not be used if the hybrid optical discs 10 are to be distributed individually, for instance by individual dealers. The company can also wish to create a list of serial numbers (step 138), if the promotion is to include a sweepstakes component. This would be created to insure that the system will be able to determine winning and non-winning hybrid optical discs 10.

The second session in this example includes a disc serial number and personalized information aimed at potential automobile purchasers. It can include the target purchaser's name, address, regional information, purchase history, credit information (for online orders), information about the purchaser's current vehicle, the service history of the current vehicle, or any other information the promoter deems necessary.

In step 140, the second session can be written at the hybrid optical disc manufacturer site, using personalization information supplied by the promoter from step 136. The serial number written to the hybrid optical disc 10 will be the hybrid optical disc's 10 unique identification and can be generated from a list in the case of a sweepstakes-linked promotion, or can be randomly generated at the time of writing (step 138).

Another method used for step 140 can be that the hybrid optical disc 10 is written at a dealership, and can be triggered by a number of different events: the target consumer has expressed an interest in a new vehicle; the target consumer is a current lessee with a soon-to-expire lease; the target consumer has experienced an unusually large number of service visits recently; or any other reason the promoter might believe the target consumer represents a good prospect for viewing new vehicle information.

The hybrid optical disc is then delivered to the customer in step 142. In a large delivery, such as that which might include a sweepstakes, this can be done by a bulk mailing. Smaller distributions can be done other ways, including direct delivery into the hands of an interested customer. The prospective target puts the hybrid optical disc into a CD-ROM reader or writer (step 144) and then can view different vehicles, in an assortment of colors, from all angles, and can see various options (step 146). The options can be directed toward the target or the target's region (e.g. extra heating options in cold climates, extra air-conditioning options in warm climates, and so forth). The end-user can obtain personalized financing information, and even place an order via the control program/host system connection. If there is a sweepstakes component, this component can be presented to the customer (step 148) at this point with the indication that verification would necessarily take place at the dealer.

For verification of the optional sweepstakes component, the customer takes the hybrid optical disc to the dealer in step 150 and the dealer's system checks the preformed identification and the serial number of the hybrid optical disc (step 152) against an online list of winners 154, which is generated when the company creates the original list of serial numbers (step 138). In step 155, if the system determines that the hybrid optical disc is a winner, the customer is rewarded (step 156). If the system determines that the hybrid optical disc is not a winner, the customers have placed themselves in front of a sales agent (step 158).

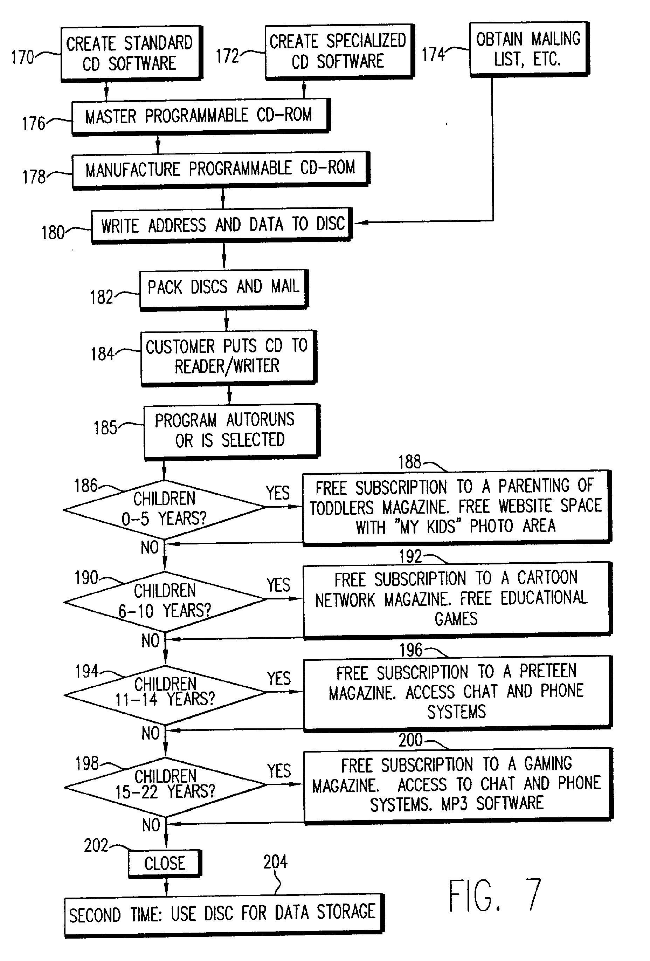

EXAMPLE 2. As a further illustrative example, an Internet service provider can create a personalized promotional hybrid optical disc touting their advantages to a given consumer and providing personalized promotions targeted at the consumer or the consumer's family. The purpose is to make an offer of Internet services to potential customers. Turning now to FIG. 7, we see one way this can be accomplished. The service provider has the necessary software and standard information prepared for the hybrid optical disc in step 170. This can include promotional and advertising information on the provider's internet service. It would also include software for accessing the provider's service, and any other information the provider deemed necessary or interesting. This software would also include a control program that launches automatically upon inserting the CD into a drive, and which controls the display of the information based on the information included in the first session and also the customized information that will be included in the second session. The provider must also prepare specialized software (step 172) which will be used (or not) depending upon the status of the potential customer. The hybrid optical discs containing this information are mastered (step 176) and manufactured (step 178) in large quantities by the aforementioned process for making hybrid optical discs, and include room for further recording.

As part of the promotion described in this example, the service provider obtains a mailing list of likely prospects in step 174. This can involve numerous criteria. In the present example, it is assumed that the service provider is interested in reaching families with children age 22 or less and has purchased a mailing list with such prospects. In step 180, the name, address, and personal information are written, in a second session, to each disc that was produced in step 178. Thus, each hybrid optical disc is "personalized." As part of this personalization, a personalized message is printed, either on an insert or on the hybrid optical disc itself, indicating that the hybrid optical disc is personalized. The hybrid optical discs are then packed and mailed in step 182.

Upon receiving the disc, the consumer should be motivated enough by the personalization message to put the disc into a CD-ROM reader or writer in a computer (step 184). The master software on the disc is selected or autoruns (step 185). The program reads the information in the second session and presents the consumer with a personalized choice (or choices). If the information indicates that the consumer has children age 5 or less (step 186), the software presents the consumer with a chance to get information relating to very young children (step 188), as well as a personalized storage space on the internet for storing their photos. In step 190, if the consumer's children are aged 6 to 10, the program presents information that would be of interest to children of that age (step 192), as well as free educational games. In step 194, if the consumer has children aged 11 to 14, the program presents the consumer with a subscription to an online magazine of interest to preteens and early teens and access to appropriate chat rooms and online phone systems (step 196). In step 198, the program checks if there are children in the household aged 15 to 22 years. If so, the program presents a subscription to an online gaming magazine, access to appropriate chat rooms and phone systems, and MP3 or other age-appropriate software (step 200). After presenting the consumer with choices appropriate to the age of the household children, the program ends in step 202. Once this process is complete, the disc can be used as a general CD-R disc (step 204).

All of the age-appropriate modules (in steps 188, 192, 196, and 200) can be mastered on the original disc in step 176. They are included in the specialized software step 172. The control software, which was created in step 170, decides which of the modules are to be presented to the consumer based on the customized information that was written in step 180.

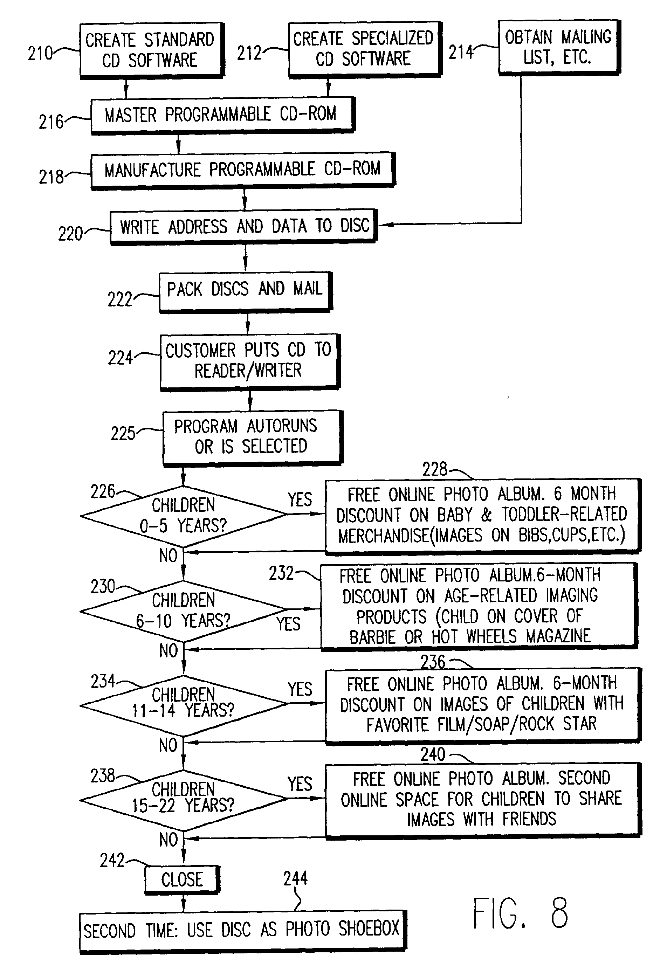

EXAMPLE 3. As a further illustrative example, a photographic E-Commerce service can create a customized promotional disc touting its services to a given consumer and providing personalized promotions targeted at the consumer or the consumer's family. Turning now to FIG. 8, we see one way this can be accomplished. The service provider has the necessary software and standard information produced for the Programmable CD-ROM in step 210. This can include promotional and advertising information on the provider's online services. It would also include software for accessing the service's website, and any other information the service deemed necessary or interesting. This software would also include a control program that launches automatically upon inserting the CD into a drive, and which controls the display of the information based on the information included in the first session and also the customized information that will be included in the second session. The provider can also prepare specialized software (step 212) which will be used (or not) depending upon the status of the potential customer. The discs containing this information are mastered (step 216) and manufactured (step 218) in large quantities by the aforementioned process for making hybrid Programmable CD-ROM discs, and include room for further recording.

As part of the promotion described in this example, the service obtains a mailing list (in step 214) of likely prospects. This can involve numerous criteria. In the present example, it is assumed that the service provider is interested in reaching families with children age 22 or less and has purchased a mailing list with such prospects. In step 220, the name, address, and personal information are written, in a second session, to each disc that was produced in step 218. Thus, each disc is "personalized." As part of this personalization, a personalized message is printed, either on an insert or on the disc itself, indicating that the disc is personalized. The discs are then packed and mailed (step 222).

Upon receiving the disc, the consumer might be motivated enough by the personalization message to put the disc into a CD-ROM reader or writer in a computer (step 224). The master software on the disc is selected or autoruns (step 225). The program reads the information in the second session and presents the consumer with a personalized choice (or choices). If the information indicates that the consumer has children age 5 or less (step 226), the software presents the consumer with a free online photo album (step 228), as well as a discount on baby- and toddler-related items printed with their child's photos. In step 230, if the consumer's children are aged 6 to 10, the program presents the consumer with a free online photo album (step 232), as well as a discount on imaging products that would appeal to children of that age (e.g. the child's photo on the cover of a children's magazine). In step 234, if the consumer has children aged 11 to 14, the program presents the consumer with a free online photo album (step 236), as well as a discount on images that would appeal to children of that age (e.g. a picture of the child with a favorite star). In step 238, the program checks if there are children in the household aged 15 to 22 years. If so, the program presents the consumer with a free online photo album, as well as a second online space that their child can access for distributing photos (step 240). After presenting the consumer with choices appropriate to the age of the household children, the program ends in step 242. Once this process is complete, the disc can be opened as a photo shoebox to hold the consumer's photos (step 244).

All of the age-appropriate modules (in steps 228, 232, 236, and 240) can be mastered on the original disc in step 216. They are included in the specialized software step 212. The control software, which was created in step 210, decides which of the modules are to be presented to the consumer based on the customized information that was written in step 220.

Although the examples presented here relate to optical discs, this process can be used with other storage media such as solid state, in which one can create a recorded or prerecorded portion and a writeable portion and later write customizing information to the writeable portion. The so-prepared recorded medium can then be delivered to the target user.

Other features of the invention are included below.

The method further including the step of using the identification information to particularly write on another medium information related to that user.

## Claims

1. A method of customizing a storage medium having one or more recorded session(s) and having a writeable portion comprising the steps of:
a) providing in a recorded session a program for marketing or sales of one or more particular products or services;
b) writing information in the writeable portion pertaining to a particular user selected from a plurality of potential users of the product described in the recorded session, such information including data which particularly identifies the particular user; and
c) delivering the recorded medium with the user-identified data to the particular user.

2. The method of claim 1 wherein more than one particular users are selected from the plurality of users and each of the particular users is provided with a recordable medium with the identifying data for such user.

3. The method of claim 2 further including the step of using the identification information to particularly write on another medium information related to that user.

4. A method of customizing a hybrid CD having a recorded session(s) in a ROM portion and having a writeable portion comprising the steps of:
a) providing in a preformed session a program for marketing or sales of one or more particular products or services;
b) writing information in the writeable portion pertaining to a particular user selected from a plurality of potential users of the product or services described in a preformed session, such information including data which particularly identifies the particular user; and
c) delivering the CD with the user-identified data to the particular user.

5. The method of claim 4 wherein more than one particular users are selected from the plurality of users and each of the particular users is provided with a CD with the identifying data for such user.

6. The method of claim 4 further including the step of using the identification information to particularly write on another medium information related to that user.

7. The method of claim 6 when the another medium is an optical disc which contains information related to the product or services.

8. The method according to claim 4 wherein a subroutine is provided in the session to permit access to the written information in the writeable portion.

9. A method of customizing a CD having one or more recorded session(s) and having a writeable portion to permit user access to product or services provided over a network, comprising the steps of:
a) providing in a recorded session a program for marketing or sales of one or more particular products or services and a subroutine which permits an identified user to have access to the product or services;
b) writing information in the writeable portion pertaining to a particular user selected from a plurality of potential users of the product or services described in a recorded session, such information including data which particularly identifies the particular user;
c) delivering the CD with the user-identified data to the particular user; and
d) the user accessing the CD to the network to permit access to the products or services.

10. The method of claim 9 wherein more than one particular users are selected from the plurality of users and each of the particular users is provided with a recordable medium with the identifying data for such user.
